# EUROPEAN PATENT APPLICATION

(11) **EP 1 695 865 A1**
(43) Date of publication of application: **30.08.2006**
(21) Application number: 06100855.3
(22) Date of filing: 25.01.2006
(51) Int. Cl.: B60N 2/28

(54) **Child seat for automobiles**

(30) Priority: 23.02.2005 ES 200500407
(71) Applicant: PLAY, S.A., 08184 Palau de Plegamans (ES)
(72) Inventor: Jane Stopp, Joaquim PLAY, S.A., 08184 Palau de Plegamans (ES)
(74) Representative: Ponti Sales, Adelaida

(57) **Abstract**

The child seat for automobiles (1) comprises a head (2) movable vertically along the backrest of the seat, comprising this seat a seat belt (4), and it is characterized in that said movable head (2) comprises regulation means (5) of the height of the upper part of the seat belt (4) of the child seat integral with said movable head (2).

According to a preferred embodiment, said regulating means comprises a rod (5), over which it passes the seat belt (4) of the seat, integral with said movable head (2).

It permits to vary the position of the upper part of the seat belt at the same time with varies the position of the head.

## Description

The present invention relates to an child seat for automobiles, which comprises a movable part in the backrest to adapt to the height of the child who uses it.

### BACKGROUND OF THE INVENTION

Nowadays child seats are known that are used usually to take to the children from a place to the other in short passages. These seats also are adapted when the child must remain a certain time in a place, like e.g. to travel in an automobile.

In addition, these well-known seats that are used in automobiles are designed specially to be used by children whose weight is within an determined interval of weights, which entails that the chair must be changed when the child exceeds a certain weight. These seats must pass diverse controls for their homologation and to assure, therefore, that fulfil the security requirements prescribed. Specifically, the child seats for automobiles are separated in four groups:
- Group 0: It allows its use by a child of up to 10 kg (up to 9 months approximately);
- Group 0+: It allows its use by a child of up to 13 kg (up to 18 months approximately);
- Group 1: It allows its use by a child with a weight between 9 and 18 kg (between 9 months and 4 years approximately); and
- Group 2-3: It allows its use by a child with a weight between 15 and 36 kg (between 3 and 12 years approximately).

As it can be verified from the previous data, these seats can be used, by reasons for security and comfort, during a relatively short period of time.

In order to solve these disadvantages the child seat described in the Spanish utility model U200001715 was devised, of the same holder who the present application. This child seat comprises a movable head to adapt itself to the height of the child who uses it. This way an child seat is obtained that can be used during much more time.

Nevertheless, this child seat presents the disadvantage that the position of the upper part of the seat belt has to be regulated manually. For it, the seat comprises in the back part of the backrest two grooves, so that it must be placed in one or another groove depending on the height of the child. In order to pass the seat belt from one groove to the other groove the seat belt must be disassembled.

### DESCRIPTION OF THE INVENTION

With the child seat of the invention the mentioned disadvantages can be solved, presenting other advantages that will be described.

The child seat for automobiles of the present invention comprises a head movable vertically along the backrest of the seat, comprising this seat a seat belt, and it is characterized in that said movable head comprises regulation means of the height of the upper part of the seat belt of the child seat integral with said movable head.

Thanks to this feature, the height of the upper part of the seat belt can be regulated comfortably, since it is done automatically when varying the position of the movable head. This way, the seat belt is always in its correct position, i.e., its upper part just over the shoulders of the child who uses the seat.

According to a preferred embodiment, said regulating means comprises:
- a rod, over which it passes the seat belt of the seat, integral with said movable head;
- an groove provided in said movable head placed substantially to the same height that this rod; and
- a pair of guides located in the back part of the backrest of the child seat along which the seat belt can move according to the position determined by said rod.

Advantageously, the ends of said rod protrude through grooves provided at the sides of the backrest.

### BRIEF DESCRIPTION OF THE DRAWINGS

For better understanding of what has been described, some drawings are attached in which, schematically and only like a non-limitative example, a practical case of embodiment is shown.
Figure 1 is a perspective view of the child seat of the present invention;
Figure 2 is a perspective view of the upper part of the backrest of the child seat of the present invention, seen from its back part; and

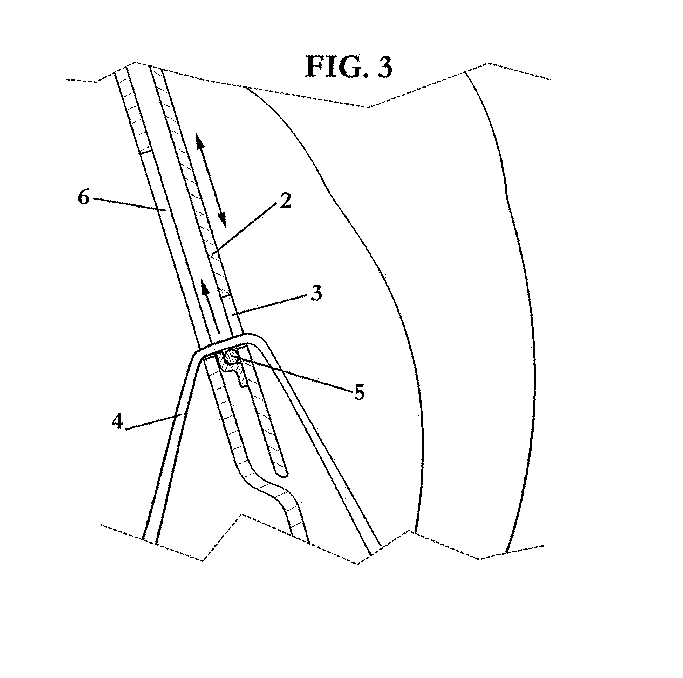

Figure 3 is a diagrammatical lateral view of the regulating means of the seat belt of the child seat.

### DESCRIPTION OF A FAVOURITE EMBODIMENT

As can be seen in the figures, the child seat for automobiles of the present invention, identified generally by numerical reference 1, comprises a movable head 2 with respect to the rest of the backrest vertically. This head 2 comprises a pair of grooves 3 for the passage of the seat belt 4 of the child seat 1.

According to the invention, said head 2 comprises a rod 5 integral with it, over which it passes the seat belt 4. The position of this rod 5 is that which determines the position of the upper part of belt 4.

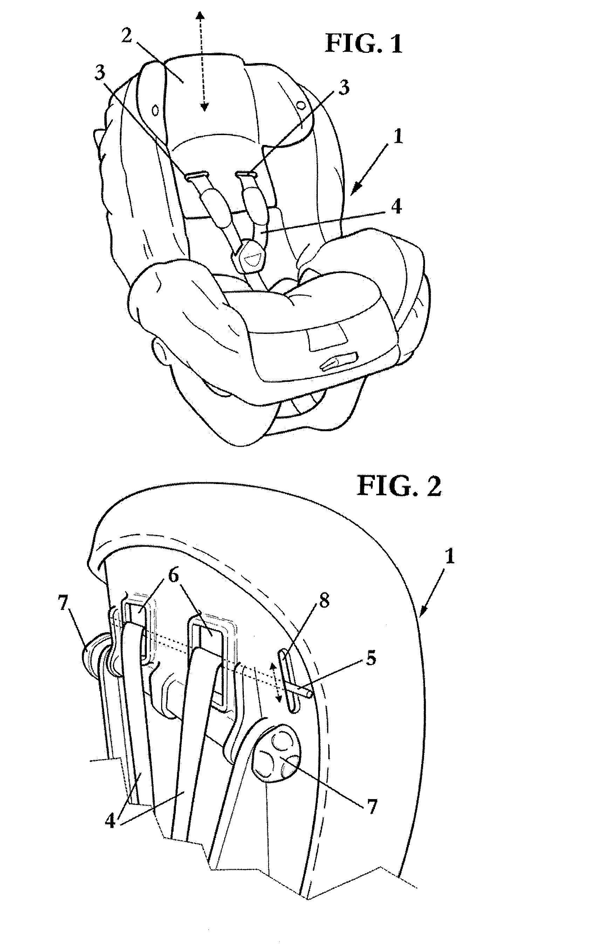

In the back part of the backrest a pair of guides 6 are provided, along with the seat belt 4 can move, as can be seen in figure 2.

The head 2 can be placed in a plurality of positions through knobs 7 provided at the sides of the backrest.

In order to facilitate the assembly of rod 5, its ends can protrude through grooves 8 provided at the sides of the backrest.

In order to vary the position of the upper part of the seat belt 4 simply the head have to be lowered or raised by one of the knobs 7. It must be taken into account that this position must be always just over the shoulders of the child who occupies seat 1.

When moving the head 2, the rod 5 also moves, since they are integral to each other, varying the position of the upper part of this belt 4.

Although reference is made to a particular embodiment the invention, it is evident for a person skilled in the art that the described child seat is susceptible of numerous variations and modifications, and that all the mentioned details can be replaced by technically equivalent others, without departing from the scope of protection defined by the attached claims.

## Claims

1. Child seat for automobiles (1) comprising a head (2) movable vertically along the backrest of the seat, comprising this seat a seat belt (4), **characterized in that** said movable head (2) comprises regulation means (5) of the height of the upper part of the seat belt (4) of the child seat integral with said movable head (2).

2. Child seat according to claim 1, **characterized in that** said means of regulation comprises:
- a rod (5), over which it passes the seat belt (4) of the seat, integral with said movable head (2);
- an groove (3) provided in said movable head (2) placed substantially to the same height that this rod (5) ; and
- a pair of guides (6) located in the back part of the backrest of the child seat (1) along which the seat belt (4) can move according to the position determined by said rod (5).

3. Child seat according to claim 2, **characterized in that** the ends of said rod (5) protrude through grooves (8) provided at the sides of the backrest.
